# EUROPEAN PATENT APPLICATION

(11) **EP 4 600 822 A1**
(43) Date of publication of application: **13.08.2025**
(21) Application number: 24165719.6
(22) Date of filing: 07.02.2024
(51) Int. Cl.: G06F 9/50

(54) **SYSTEM AND METHOD FOR OPTIMIZED DATA PROCESSING IN A DISTRIBUTED NETWORK**

(62) Divisional of application: 24156410.3
(71) Applicant: Meyer zu Bexten, Elmar, 71032 Böblingen (DE)
(72) Inventor: Meyer zu Bexten, Elmar, 71032 Böblingen (DE)

(57) **Abstract**

The present invention relates to a computer-implemented method and system for optimized data processing in a distributed network. The invention addresses the need for efficient, secure, and effective handling of large volumes of data in complex network environments. The method involves receiving data from one or more sources within the network, analyzing this data to determine its characteristics using advanced algorithms, including machine learning techniques, and then selecting appropriate processing nodes within the network for further data processing. The selection of nodes is based on a set of criteria such as processing capabilities, data security requirements, and energy efficiency. The system comprises a central processing unit, multiple specialized processing nodes, and a communication network facilitating data transfers. The invention ensures that data processing is conducted in an optimized manner, balancing speed, security, and efficiency, and is particularly applicable in environments where data handling and processing demands are high and variable. Additionally, a non-transitory computer-readable medium is provided, which stores instructions that, when executed by a computer, enable the performance of the method. This invention is particularly suited for use in industries where large-scale data analytics and real-time processing are critical, such as finance, telecommunications, and cloud computing services.

## Description

### Technical Field

The invention relates to the process and products as per the prior art portion of the independent claims.

### Background Art

The field of distributed computing has seen significant advancements, primarily driven by the increasing need to process large volumes of data efficiently across various industries.

### Summary of Invention

The invention is set out in the appended set of claims.

### Technical Problem

Traditional computing models often struggle to cope with the scale and complexity of modern data requirements, leading to inefficiencies and bottlenecks.

**Distributed Computing Systems:** Existing technologies include various forms of distributed computing systems, such as cloud computing, grid computing, and peer-to-peer networks. These systems allow for the division of data processing tasks across multiple networked computers, which can improve processing speed and efficiency.

**Data Processing Algorithms:** The development of sophisticated algorithms, including machine learning and artificial intelligence, has been crucial in analyzing and processing data. However, the effectiveness of these algorithms largely depends on the capability of the underlying system to handle diverse and complex datasets.

**Optimization Challenges:** One of the main challenges in distributed computing is the optimal allocation of resources for data processing. This involves determining which nodes in a network should process specific data sets, based on factors like processing power, data security, and network latency.

**Energy Efficiency and Sustainability:** With increasing awareness of environmental impacts, there is a growing emphasis on energy efficiency in data processing. Solutions that reduce energy consumption while maintaining high performance are in demand.

**Security and Privacy Concerns:** As data processing often involves sensitive information, ensuring data security and compliance with privacy regulations (such as GDPR in Europe) is a significant challenge in distributed computing systems.

### Solution to Problem

As shall be further elucidated in the following description, this problem is solved as per the characterizing portion of the independent claims.

### Advantageous Effects of Invention

The advantageous effect of the invention, which is a computer-implemented method and system for optimized data processing in a distributed network, can be summarized as follows:

**Enhanced Efficiency in Data Processing:** By intelligently selecting processing nodes based on data characteristics and processing requirements, the invention optimizes the use of network resources. This results in faster and more efficient data processing, especially beneficial for handling large-scale or complex data sets.

**Improved Resource Allocation:** The invention dynamically allocates data processing tasks to nodes within the network based on their processing capabilities. This targeted allocation helps in maximizing the utilization of network resources, reducing bottlenecks and improving overall system performance.

**Energy Conservation:** By optimizing the selection of processing nodes, the system can significantly reduce energy consumption. This is particularly important in large-scale data centers where energy efficiency is a major concern, both from a cost and environmental perspective.

**Enhanced Data Security and Compliance:** The method takes into account data security requirements and privacy regulations in the processing node selection process. This ensures that sensitive data is handled in compliance with legal standards, such as GDPR, enhancing the security and integrity of data processing.

**Scalability and Flexibility:** The system is designed to be scalable, accommodating increasing data volumes and processing demands without significant reconfiguration. This flexibility makes it suitable for a wide range of applications, from small-scale operations to large, complex data networks.

**Reduction in Processing Latency:** By optimally distributing data processing tasks across the network, the invention reduces latency, which is crucial for applications requiring real-time data processing, such as financial transactions or live data analytics.

**Customizability for Various Industries:** The invention's method can be tailored to the specific needs of different industries, making it versatile and broadly applicable in fields such as finance, telecommunications, healthcare, and cloud computing services.

Overall, the invention provides a comprehensive solution to the challenges of data processing in distributed networks, offering improvements in efficiency, security, energy consumption, and operational adaptability.

### Description of Embodiments

### System Architecture:

Central Processing Unit (CPU): The system includes a central processing unit that acts as the primary controller. This CPU is equipped with advanced algorithms, including machine learning capabilities, to analyze incoming data and make decisions regarding its processing.

Distributed Network of Processing Nodes: The network comprises a variety of processing nodes. These nodes may vary in their capabilities, such as computational power, storage capacity, and specialized hardware for specific types of data processing tasks.

Communication Infrastructure: A robust communication network interlinks the CPU with the processing nodes. This network facilitates efficient data transfer and supports real-time updates on the status of each node.

### Operational Process:

Data Reception and Analysis: The CPU receives data from various sources. It analyzes this data to identify characteristics such as volume, complexity, security requirements, and urgency.

Node Selection Algorithm: Based on the analysis, the CPU utilizes a sophisticated algorithm to select the most suitable processing nodes. This selection considers factors like the node's processing power, current load, proximity to the data source (to minimize latency), and energy efficiency.

Data Distribution and Processing: Once the nodes are selected, the CPU distributes the data among these nodes. Each node processes its allocated data segment according to the predefined parameters.

Processing Outcome Collection: After processing, the results are sent back to the CPU. The CPU may further aggregate, analyze, or redistribute the processed data for additional operations if necessary.

Dynamic Adaptation: The system continuously monitors the performance and availability of processing nodes, adapting to changes in network conditions, processing demands, and data characteristics. This dynamic adaptation ensures optimal performance at all times.

### Example

Imagine a telecommunications company that needs to process vast amounts of data from its network to optimize traffic flow, ensure security, and provide personalized services to customers. The company employs this invention to manage its data processing needs. The CPU receives real-time data from various network sensors and user devices. It analyzes this data for patterns, security threats, and service demands, and then intelligently allocates processing tasks to the nodes best suited for each task, considering factors like processing speed, data sensitivity, and energy efficiency. This results in an optimized network operation, with improved data handling, reduced latency, enhanced security, and lower operational costs.

## Claims

1. A computer-implemented method for optimized data processing in a distributed network, the method comprising:
a. receiving, by a processing unit, data from at least one data source within the distributed network;
b. analyzing, by the processing unit, the received data to determine data characteristics;
c. selecting, by the processing unit, one or more processing nodes within the distributed network based on the determined data characteristics and a set of processing criteria;
d. transmitting, by the processing unit, the received data to the selected one or more processing nodes for further processing; and
e. receiving, by the processing unit, the processed data from the one or more processing nodes.

2. The method of claim 1, wherein analyzing the received data includes:
a. identifying data patterns using a machine learning algorithm; and
b. categorizing the received data based on the identified patterns.

3. The method of claim 1 or 2, wherein selecting one or more processing nodes includes:
a. evaluating the processing capabilities of available nodes in the distributed network; and
b. determining the optimal node or nodes based on the evaluated processing capabilities and the data characteristics.

4. The method of any preceding claims, wherein the set of processing criteria includes one or more of:
a. processing speed requirements;
b. data security requirements;
c. data privacy regulations; and
d. energy efficiency considerations.

5. A system for optimized data processing in a distributed network, comprising:
a. a plurality of processing nodes;
b. a central processing unit configured to perform the steps of the method according to any of claims 1-4; and
c. a communication network enabling data transfer between the central processing unit and the processing nodes.

6. The system of claim 5, wherein the processing nodes are specialized for different types of data processing tasks.

7. The system of claim 5 or 6, further comprising:
a. a data storage unit for storing processed and unprocessed data; and
b. a user interface for displaying the results of processed data.

8. A non-transitory computer-readable medium storing computer-executable instructions, which when executed by a computer, cause the computer to perform the method of any of claims 1-4.
